# EUROPÄISCHE PATENTSCHRIFT

(11) **EP 0 948 834 B1**
(45) Veröffentlichungstag und Bekanntmachung des Hinweises auf die Patenterteilung: **17.08.2005**
(21) Anmeldenummer: 97938825.3
(22) Anmeldetag: 16.07.1997
(51) Int. Cl.: H02G 3/08, H02G 3/06

(54) **ANORDNUNG ZUM FÜHREN VON KABELN ODER LEITUNGEN**
CABLE OR LINE GUIDING DEVICE
DISPOSITIF POUR GUIDER DES CABLES OU DES LIGNES ELECTRIQUES

(30) Priorität: 30.07.1996 DE 19630700
(43) Veröffentlichungstag der Anmeldung: 13.10.1999
(73) Patentinhaber: Murrplastik System-Technik GmbH, 71567 Oppenweiler (DE)
(72) Erfinder: EHMANN, Bruno, D-73563 Mögglingen (DE)
(74) Vertreter: Jeck, Anton, Dipl.-Ing.
(86) Internationale Anmeldenummer: PCT/EP1997/003806
(87) Internationale Veröffentlichungsnummer: WO 1998/005108

(56) Entgegenhaltungen:
- DE-A- 3 446 503
- DE-A- 3 544 785
- DE-A- 4 434 202
- US-A- 4 797 513

## Beschreibung

Die Erfindung betrifft eine Anordnung zum Führen von Kabeln und Leitungen nach dem Oberbegriff des Anspruches 1.

Bei herkömmlichen Anordnungen der eingangs genannten Art, wie sie z.B. in der DE 35 44 785 A1 beschrieben sind und in Kraftfahrzeugkarosserien eingesetzt werden, besteht der Körper aus zwei dünnwandigen Kunststoffhalbschalen, dessen Innenraum mit einem gummielastischen Aufnahmekörper mit entsprechenden Öffnungen für die Kabel und Leitungen formschlüssig ausgefüllt ist. Der gewünschte Kraftschluß zwischen dem Körper und dem Aufnahmekörper wird durch Verbinden der Schalensegmente mittels Schnappverschlüsse erreicht. Eine einfache und betriebsgemäße Verbindung zwischen den einzelnen Teilen wird allerdings nur dann erreicht, wenn der Innendurchmesser der Kabelöffnung nur geringfügig kleiner ist als der Außendurchmesser des aufgenommenen Kabels. In allen anderen Fällen nämlich, wird zwischen dem aufgenommenen Kabel und dem Aufnahmekörper entweder keine dichte Verbindung mit entsprechender Zugentlastung (Durchmesser des Kabels ist kleiner als der Durchmesser der Öffnung) erreicht oder aber, die Schalensegmente können miteinander nicht ohne weiteres betriebsgemäß verbunden werden (der Durchmesser des Kabels ist deutlich größer als der Durchmesser der entsprechenden Öffnung). In solchen Fällen bietet sich an, einen weichen Gummi zu wählen, jedoch auf Kosten einer Zugentlastung, die bei Schaltschränken von entscheidender Bedeutung ist.

Schließlich ist in der EP 430 016 eine Vorrichtung zum Abdichten eines in einer Schrankwand des Schaltschrankes angebrachten Lochs zur Durchführung eines Kabels offenbart, die aus Gehäuseteilen aus Guß besteht, deren Innenraum ebenfalls mit komprimierbaren Schaumstoffklötzen aus Gummi ausgefüllt ist. An der Innenseite eines der beiden Gehäuseteile sind Schellen zur Kabelbefestigung befestigt, und zwar mittels Schrauben, die in einen Steg und quer zur Erstreckung der Kabel einschraubbar sind. Die Gehäuseteile sind mittels Schrauben miteinander verbindbar. Nachteilig wird bei der bekannten Vorrichtung die Tatsache empfunden, dass eine ordnungsgemäße Verbindung der Kabel mit den zugeordneten Schellen nicht nur umständlich, sondern auch zeitaufwändig ist und dies insbesondere dann, wenn mehrere Vorrichtungen auf engstem Raum angeordnet sind bzw. die Vorrichtung für eine Vielzahl von Kabeln/Leitungen vorgesehen ist.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Man erkennt, dass die Erfindung jedenfalls dann verwirklicht ist, wenn es sich um eine Anordnung zum Führen von Kabeln oder Leitungen durch Wände mit einem Verbindungsstück und einem aus zwei Teilen bestehenden, mit der Wand über dieses Verbindungsstück betrieblich verbindbaren und mindestens eine durchgehende Öffnung mit Einlass- und Auslasspartie aufweisenden Körper mit Hohlraum handelt, wobei die Einlasspartie von der Wand abgekehrt und die Öffnung von einer Teilungsfuge durchquert ist, bei der in der Einlasspartie ein das Kabel mit dem Körper annähernd dicht verbindbares Organ mit einer mit dem Kabel betrieblich verbindbaren Zugentlastung ortsfest angeordnet ist, die Zugentlastung einen in Kabelrichtung sich erstreckenden Vorsprung mit einem Kabelbinder aufweist und das Organ zwei Bünde aufweist, die sich an der Außen- bzw. Innenseite der Einlasspartie abstützen. Das Organ besteht vorzugsweise aus Gummi, Kunststoff oder Glasfaser, ist zwischen den beiden Teilen kraft- und/oder formschlüssig einklemmbar und somit ortsfest anorderbar. Bei Herstellung einer betriebsgesmäßen Verbindung kann vorzugsweise so vorgegangen werden, dass das in Längsrichtung geschlitzte und rohrförmige Organ (Tülle) aufgeklappt wird und das Kabel aufnimmt. Daraufhin wird die Zugentlastung mit dem Kabel z. B. mittels eines Kabelbinders verbunden, in die Einlasspartie gelegt und die Teile werden schließlich miteinander ordnungsgemäß verbunden. Bei mehreren Kabeln oder einer Vielzahl von Kabeln werden diese mit jeweils einem Organ bestückt, sodann in die zugeordnete Einlasspartie gelegt und die Teile vorzugsweise durch Zusammenklippsen miteinander verbunden. Da die aus Kunststoff bestehenden Teile erfindungsgemäß gleiche Form besitzen, werden für die Herstellung einer kompletten Anordnung allenfalls nur zwei Spritzgießformen benötigt. Dadurch, dass das Organ gleichzeitig zwei Funktionen (Zugentlastung einerseits und Abdichtung andererseits) erfüllt und minimale Maße aufweist, wird der Manipulationsraum (Hohlraum) der Anordnung erhöht und der Materialaufwand verringert.

Weitere zweckmäßige und vorteilhafte Ausgestaltungen der Erfindung gehen aus den Unteransprüchen hervor.

Eine besonders zweckmäßige Ausgestaltung sieht vor, dass das Organ den Freiraum zwischen dem Kabel und der Einlasspartie ausfüllt und da sich die zwei Bünde an der Außen- bzw. Innenseite der Eingangspartie abstützen, wird auf besonders einfache Weise erreicht, dass eine unverschiebbare Verbindung zwischen dem Organ und den Teilen auch dann gewährleistet ist, wenn das Organ aus einem relativ weichen (gute Abdichtung) Werkstoff besteht.

Eine weitere zweckmäßige Ausgestaltung sieht vor, dass der Vorsprung das Kabel etwa um 180° umgreift und im Hohlraum vollständig angeordnet ist. Bezüglich der Handhabung mit dem Organ ist es zweckmäßig, wenn der Vorsprung mit Abstand zu den Innenwänden des Hohlraumes angeordnet ist. Um eine schnelle Verbindung der Teile zu erreichen, sieht eine zweckmäßige Ausgestaltung der Erfindung vor, dass die Teile durch Rastkörper miteinander lösbar verbindbar sind. Dabei ist es zweckmäßig, wenn die elastisch verformbaren Rastkörper an den Teilen angeformt sind.

Eine weitere zweckmäßige Ausgestaltung sieht vor, dass die Teile mittels eines Filmscharniers verbunden sind, was die Herstellung und das Verbinden der Teile miteinander vereinfacht; zumal die Teile miteinander unverlierbar verbunden sind. Bezüglich der Befestigung und genauen Positionierung der Anordnung an einer Wand ist es zweckmäßig, wenn der Körper zur Wand hin gerichtete und zentrierende Vorsprünge aufweist. Im Rahmen dieses Erfindungsgedankens ist es vorteilhaft, wenn die Zentriervorsprünge mit Zentrieröffnungen der Wand bzw. eines Zwischenstücks formschlüssig verbindbar sind.

Ein Ausführungsbeispiel der Erfindung ist in der Zeichnung schematisch dargestellt und wird im folgenden näher erläutert. Es zeigen:
- Fig. 1: eine Anordnung mit einem Verbindungsstück in Seitenansicht,
- Fig. 2: die Anordnung nach Fig. 1 in Stirnansicht,
- Fig. 3: den Körper der Anordnung nach Fig. 1 in Stirnansicht und Explosionsdarstellung,
- Fig. 4 und 5: den Körper nach Fig. 3 in geschlossener und in geöffneter Position, jedoch mit einem Filmscharnier,
- Fig. 6: einen Querschnitt einer Anordnung mit einem Organ, dessen Zugentlastung im Hohlraum angeordnet ist, und
- Fig. 7: die Anordnung nach Fig. 6, wobei die Zugentlastung außerhalb des Körpers angeordnet ist.

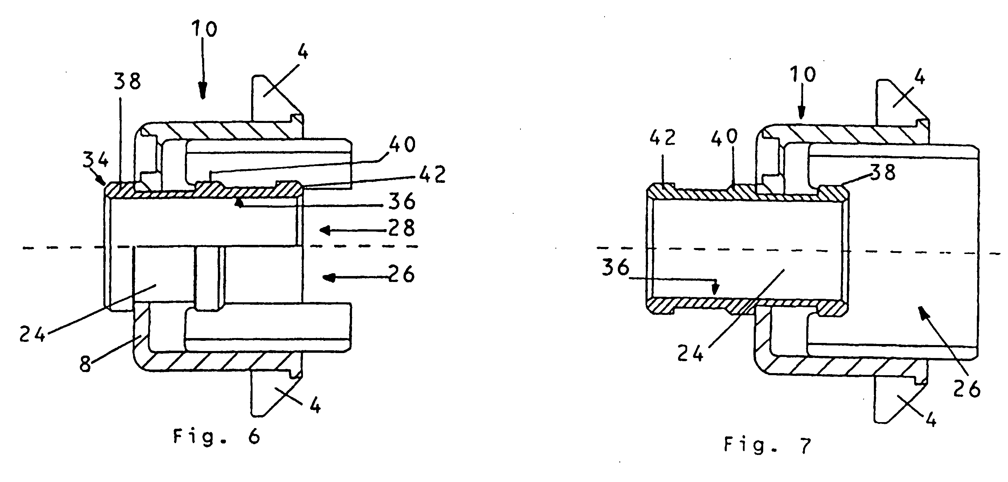

In den Figuren ist eine Anordnung bzw. ein Teil einer Anordnung zum Führen von Kabeln oder Leitungen durch Wände, Böden oder dgl. mit einem aus zwei Teilen 12, 14 bestehenden, mit einer nicht näher dargestellten Wand betrieblich verbindbaren und vier durchgehende Öffnungen 16, 18, 20, 22 mit Einlaß- und Auslaßpartien 24, 26 (Fig. 6, 7) aufweisenden Körper 10 mit Hohlräumen 28, 30 (Fig. 5) dargestellt. Die Einlaßpartien 24 sind von der Wand abgekehrt und die Öffnungen 16 - 22 sind von einer Trennfuge 32 durchquert. Man erkennt, daß in der Einlaßpartie 24 (Fig. 6, 7) ein das nicht näher dargestellte Kabel mit dem Körper 10 annähernd dicht verbindbares Organ 34 mit einer in den Hohlraum 28 hineinragenden und mit dem Kabel betrieblich verbindbaren Zugentlastung 36 ortsfest angeordnet ist. Das Organ 34 besteht aus einem elastisch verformbaren Werkstoff, z.B. Gummi oder Kunststoff, und füllt den Freiraum zwischen dem Kabel und der Einlaßpartie 24 aus. Man erkennt ferner, daß das Organ 34 zwei Bünde 38, 40 aufweist, die sich an der Außen- bzw. Innenseite der Einlaßpartie 24 abstützen. Dabei ist der Abstand der Bünde 38, 40 voneinander so gewählt, daß er etwa der Wandstärke des Körpers 10 im Bereich der Einlaßpartie 24 entspricht. Ferner ist zu erkennen, daß die Bünde 38, 40 mit den Außenwänden der Einlaßpartie 24 in dichter Druckverbindung stehen. Wie Fig. 6, 7 erkennen lassen, weist die Zugentlastung 36 einen in Kabelrichtung sich erstreckenden Vorsprung 42 mit einem nicht näher dargestellten Kabelbinder auf, wobei der Vorsprung 42 das Kabel in etwa um 180° umgreift und im Hohlraum 28 vollständig (Fig. 6) bzw. außerhalb des Hohlraums 28 (Fig. 7) angeordnet ist. Der Vorsprung 42 ist mit Abstand zu den Innenwänden des Hohlraums 28 angeordnet, wodurch die Manipulation mit dem Kabelbinder vereinfacht werden kann.

Die in den Figuren dargestellten Teile 12, 14 sind durch Rastkörper 44, 46, die an den Teilen 12, 14 angeformt sind, lösbar verbindbar. Die Rastkörper 44, 46 sind hakenförmig ausgebildet und besitzen eine Nase 43, die in den Ausnehmungen 41 des jeweils anderen Teils eingreifen.

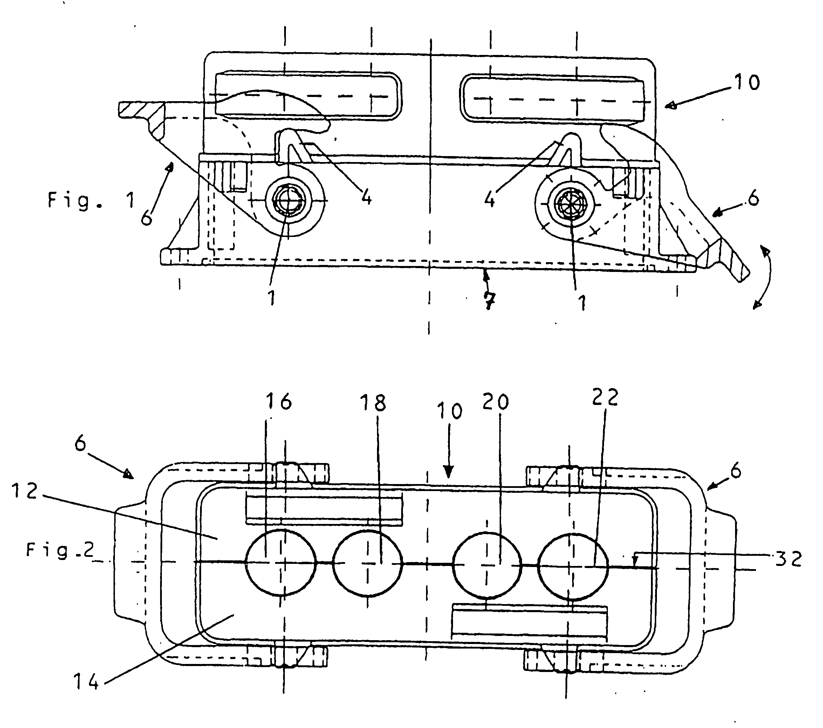

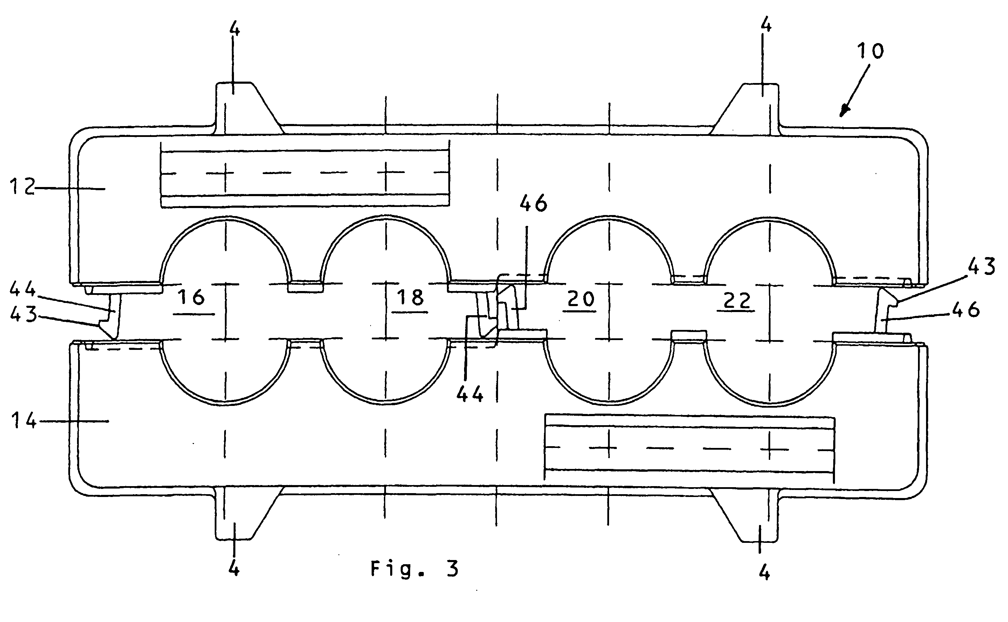

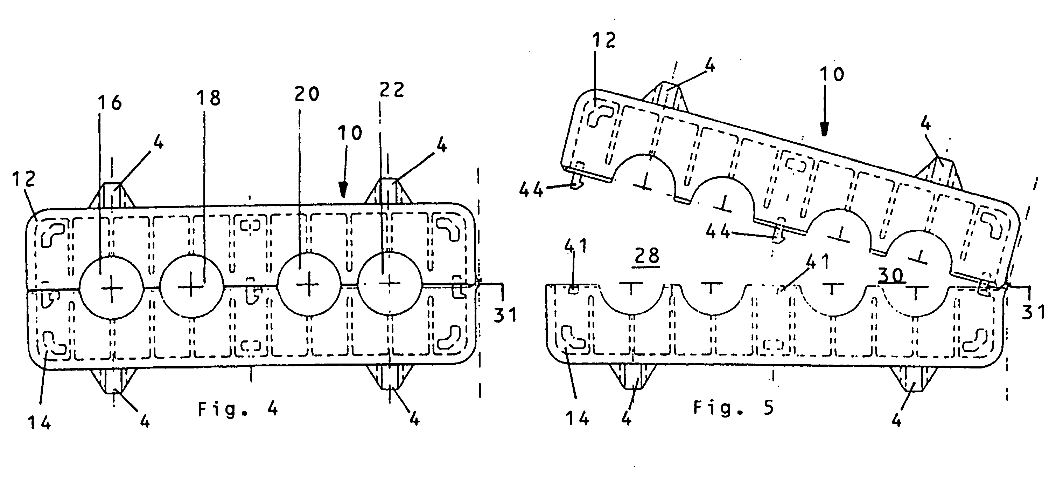

In den Figuren 4 und 5 sind die Teile 12, 14 miteinander durch ein Filmscharnier 31 verbunden, während die Ausführungsform nach Figur 3 kein Filmscharnier aufweist. Gemeinsam ist ferner, daß die Teile 12, 14 jeweils zwei seitlich angeordnete Vorsprünge 4 aufweisen, die dazu dienen, eine betriebsgemäße Verbindung mit einem Verbindungsstück 7 herzustellen, das zwei Hebel 6 aufweist, die im wirksamen Zustand den Körper 10 mit einer nicht mehr dargestellten Wand betriebsgemäß verbinden. Das Verbindungsstück 7 ist ein an die Umrisse des zweiteiligen Körpers 10 angepasster Basiskörper, an den der zweiteilige Körper 10 mittels der Hebel 6 befestigbar ist und der selbst an der nicht dargestellten Wand, beispielsweise einer Schrankwand eines Schaltschranks, befestigt wird. Die Hebel 6 sind um die Achsen 1 und in Richtung des Doppelpfeiles verschwenkbar (vgl. Fig. 1). Den Figuren 6, 7 ist ferner zu entnehmen, dass die Auslasspartie (26) der Wand zugewandt ist und dass der Hohlraum 28 im Wesentlichen quaderförmig ist, wobei in der Vorderwand 8 die Einlasspartie 24 ausgebildet ist, während die Rückseite frei ist und von der Auslasspartie 28 gebildet ist. In bevorzugter Ausführungsform kann der Körper 10 zur Wand hin gerichtete Zentriervorsprünge aufweisen, die in nicht näher dargestellte Zentrieröffnungen der Wand bzw. eines Zwischenstücks formschlüssig eingreifen. Eine Besonderheit der Erfindung besteht auch darin, dass die Teile 12, 14 identische Formen aufweisen, so dass für die Herstellung nur eine Spritzgießform erforderlich ist.

Es ist auch ein Körper für eine hier in Rede stehende Anordnung zum Führen von Kabeln oder Leitungen durch Wände dargestellt, der die zwei Teile 12, 14 aufweist, mindestens eine durchgehende und von der Teilungsfuge 32 durchquerte Öffnung 16 bis 20 mit Einlass- und Auslasspartien 24, 26 besitzt, die mit einem das Kabel mit dem Körper 10 annähernd dicht- und zugfest verbindenden Organ 34 betrieblich verbindbar sind, und der den zur Wand hin offenen Hohlraum 28 aufweist. Die Teile 12, 14 sind durch die Rastkörper 44, 46 miteinander verbindbar, wobei die Teile 12, 14 im Bereich der Teilungsfuge 32 dicht miteinander verbunden sein können, und zwar vorzugsweise mittels eines Dichtungskörpers, der hier nicht näher dargestellt ist. Das Organ 34 ist am besten in den Figuren 6 und 7 dargestellt. Dabei handelt es sich um eine Tülle mit ingesamt drei Bünden 34, 40, 42, wobei die Bünde 34 und 40 eine dichte und unverrückbare Verbindung mit der Vorderwand 8 herstellen, während der Bund 42 zusammen mit der Zugentlastung 36 im Hohlraum 28 vollständig (vgl. Fig. 6) oder außerhalb des Körpers 10 (vgl. Fig. 7) angeordnet sein kann.

Die hier vorgeschlagene Anordnung wird in der Praxis regelmäßig so eingesetzt, dass dass die Leitungen bzw. Kabel mit den Organen 34 z. B. maschinell konfektioniert werden. Sodann werden sie in die Öffnungen 16, 18, 20, 22 (vgl. Fig. 5) gelegt und zugleich zentriert angeordnet. Das obere Teil 12 wird nur noch in Richtung auf das Teil 14 geschwenkt, wobei die Rastkörper 44 eine betriebsgemäße Verbindung beider Teile 12, 14 herstellen. Schließlich wird der Körper 10 mit dem Verbindungsstück 7 verbunden, wie in Figuren 1 und 2 dargestellt ist.

Die Ausführungsformen nach Figuren 4 und 5 haben den Vorteil, dass die Teile 12, 14 miteinander unverlierbar verbindbar sind, während die Ausführungsform nach Figur 3 den Vorteil hat, dass alle Öffnungen 16 bis 22 gleich zugänglich sind.

## Patentansprüche

1. Anordnung zum Führen von Kabeln oder Leitungen durch Wände mit einem Verbindungsstück (7) und einem aus zwei Teilen (12, 14) bestehenden, mit der Wand über dieses Verbindungsstück betrieblich verbindbaren und mindestens eine durchgehende Öffnung (16 - 20) mit Einlass- und Auslasspartie (24, 26) aufweisenden Körper (10) mit Hohlraum (28, 30),wobei die Einlasspartie (24) von der Wand abgekehrt und die Öffnung (16, 22) von einer Teilungsfuge (32) durchquert ist,
**dadurch gekennzeichnet,**
**dass** in der Einlasspartie (24) ein das Kabel mit dem Körper (10) annähernd dicht verbindbares Organ (34) mit einer mit dem Kabel betrieblich verbindbaren Zugentlastung (36) ortsfest angeordnet ist und dass die Zugentlastung (36) einen in Kabelrichtung sich erstreckenden Vorsprung (42) mit einem Kabelbinder aufweist und dass das Organ (34) zwei Bünde (38, 40) aufweist, die sich an der Außen- bzw. Innenseite der Einlasspartie (24) abstützen.

2. Anordnung nach Anspruch 1,
**dadurch gekennzeichnet,**
**dass** das Organ (34) aus elastisch verformbarem Werkstoff besteht.

3. Anordnung nach Anspruch 1 oder 2,
**dadurch gekennzeichnet,**
**dass** das Organ (34) den Freiraum zwischen dem Kabel und der Einlasspartie (24) ausfüllt.

4. Anordnung nach einem der Ansprüche 1 bis 3,
**dadurch gekennzeichnet,**
**dass** die zwei Bünde (38, 40) einen Abstand voneinander aufweisen, der etwa der Wandstärke des Körpers (10) im Bereich der Einlasspartie (24) entspricht.

5. Anordnung nach einem der Ansprüche 1 bis 4,
**dadurch gekennzeichnet,**
**dass** die Bünde (39, 40) mit den Außenwänden der Einlasspartie (24) in dichter Druckverbindung stehen.

6. Anordnung nach einem der Ansprüche 1 bis 5,
**dadurch gekennzeichnet,**
**dass** der Vorsprung (42) das Kabel etwa um 180° umgreift und im Hohlraum (28) vollständig angeordnet ist.

7. Anordnung nach einem der Ansprüche 1 bis 6,
**dadurch gekennzeichnet,**
**dass** der Vorsprung (42) mit Abstand zu den Innenwänden des Hohlraumes (28) angeordnet ist.

8. Anordnung nach einem der Ansprüche 1 bis 7,
**dadurch gekennzeichnet,**
**dass** die Teile durch Rastkörper (44, 46) miteinander lösbar verbindbar sind.

9. Anordnung nach einem der Ansprüche 1 bis 8,
**dadurch gekennzeichnet,**
**dass** die Rastkörper (44, 46) an den Teilen (12, 14) angeformt sind.

10. Anordnung nach einem der Ansprüche 1 bis 9,
**dadurch gekennzeichnet,**
**dass** die Teile (14) mittels eines Filmscharniers verbunden sind.

11. Anordnung nach einem der Ansprüche 1 bis 10,
**dadurch gekennzeichnet,**
**dass** die Auslasspartie (26) der Wand zugewandt ist.

12. Anordnung nach einem der Ansprüche 1 bis 11,
**dadurch gekennzeichnet,**
**dass** der Hohlraum (28) im Wesentlichen quaderförmig ist, wobei in der Vorderwand (8) die Einlasspartie (24) ausgebildet ist, während die Rückseite frei ist und von der Auslasspartie (28) gebildet ist.

13. Anordnung nach einem der Ansprüche 1 bis 12,
**dadurch gekennzeichnet,**
**dass** der Körper (10) zur Wand hin gerichtete Zenriervorsprünge aufweist.

14. Anordnung nach einem der Ansprüche 1 bis 13,
**dadurch gekennzeichnet,**
**dass** die Zentriervorsprünge Zentrieröffnungen der Wand bzw. eines Zwischenstücks formschlüssig verbindbar sind.

15. Anordnung nach einem der Ansprüche 1 bis 14,
**dadurch gekennzeichnet,**
**dass** die Teile (12, 14) Körper mit gleichen Formen sind.

## Claims

1. Arrangement for guiding cables or lines through walls and having a connecting piece (7) and a body (10) in two parts (12, 14) which can be operationally connected to the wall via this connecting piece and has a cavity (28,30) and at least one through hole (16-20) with an inlet and outlet part (24, 26), the inlet part (24) facing away from the wall and the hole (16, 22) being crossed by a juncture (32),
**characterised in that**
in the inlet part (24) is fixed an organ (24) which can link the cable with the body (10) in an approximately tight manner and has a strain relief (36) which can be operationally connected to the cable, and **in that** the strain relief (36) has a projection (42) extending in the direction of the cable and having a cable binder and **in that** the organ (34) has two bands (38, 40) which are supported on the inner or outer side of the inlet part (24).

2. Arrangement according to claim 1, **characterised in that** the organ (34) consists of a resiliently deformable material.

3. Arrangement according to claim 1 or 2, **characterised in that** the organ (34) fills the space between the cable and the inlet part (24).

4. Arrangement according to one of claims 1 to 3, **characterised in that** the two bands (38, 40) are at a spacing from one another which roughly corresponds to the wall thickness of the body (10) in the region of the inlet part (24).

5. Arrangement according to one of claims 1 to 4,
**characterised in that** the bands (39,40) are in tight pressurised connection with the outer walls of the inlet part (24).

6. Arrangement according to one of claims 1 to 5,
**characterised in that** the projection (42) encompasses the cable roughly by 180° and is arranged completely in the cavity (28).

7. Arrangement according to one of claims 1 to 6, **characterised in that** the projection (42) is arranged at a spacing from the inner walls of the cavity (28).

8. Arrangement according to one of claims 1 to 7, **characterised in that** the parts can be connected to one another in a detachable manner by snap-in bodies (44, 46).

9. Arrangement according to one of claims 1 to 8, **characterised in that** the snap-in bodies (44, 46) are integrally formed on the parts (12, 14).

10. Arrangement according to one of claims 1 to 9,
**characterised in that** the parts (14) are connected by means of an integral hinge.

11. Arrangement according to one of claims 1 to 10, **characterised in that** the outlet part (26) faces the wall.

12. Arrangement according to one of claims 1 to 11, **characterised in that** the cavity (28) is substantially cuboid, the inlet part (24) being formed in the front wall (8) whilst the rear side is free and formed by the outlet part (28).

13. Arrangement according to one of claims 1 to 12, **characterised in that** the body (10) has centring projections directed towards the wall.

14. Arrangement according to one of claims 1 to 13, **characterised in that** the centring projections may be connected by a form-fit to the centring holes of the wall or of an adaptor.

15. Arrangement according to one of claims 1 to 14, **characterised in that** the parts (12, 14) are bodies of the same shape.

## Revendications

1. Disposition pour guider des câbles ou des conduites à travers des parois avec une pièce de raccord (7) et un corps (10) avec espace creux (28, 30), composé de deux parties (12, 14), pouvant être relié en service à la paroi par cette pièce de raccord et comprenant au moins une ouverture sur toute la longueur (16-20) avec une entrée et une sortie (24, 26), l'entrée (24) étant opposée à la paroi et l'ouverture (16, 22) étant traversée transversalement par un joint de séparation (32),
**caractérisée en ce que**,
dans l'entrée (24) est disposé de manière fixe un organe (34) pouvant relier de manière à peu près étanche le câble au corps (10) avec une décharge de traction (36) pouvant être reliée en service au câble et **en ce que** la décharge de traction (36) comprend une avancée (42) s'étendant en direction du câble avec un collecteur de câble et **en ce que** l'organe (34) comprend deux collets (38, 40) qui s'appuient sur la face extérieure et intérieure de l'entrée (24).

2. Disposition selon la revendication 1, **caractérisée en ce que** l'organe (34) est composé en matériau pouvant se déformer de manière élastique.

3. Disposition selon la revendication 1 ou 2,
**caractérisée en ce que** l'organe (34) remplit l'espace libre entre le câble et l'entrée (24).

4. Disposition selon l'une quelconque des revendications 1 à 3, **caractérisée en ce que** les deux collets (38, 40) comportent un écart l'un à l'autre, qui correspond à peu près à l'épaisseur de paroi du corps (10) dans la zone d'entrée (24).

5. Disposition selon l'une des revendications 1 à 4, **caractérisée en ce que** les collets (39, 40) sont en liaison par pression étanche avec les parois extérieures de l'entrée (24).

6. Disposition selon l'une quelconque des revendications 1 à 5, **caractérisée en ce que** l'avancée (42) enserre le câble d'environ 180° et est disposée entièrement dans l'espace creux (28).

7. Disposition selon l'une quelconque des revendications 1 à 6, **caractérisée en ce que** l'avancée (42) est disposée avec un écart par rapport aux parois intérieures de l'espace creux (28).

8. Disposition selon l'une quelconque des revendications 1 à 7, **caractérisée en ce que** les parties peuvent être reliées les unes aux autres de façon mobile par des corps d'encliquetage (44, 46).

9. Disposition selon l'une quelconque des revendications 1 à 8, **caractérisée en ce que** les formes des corps d'encliquetage (44, 46) sont adaptées aux parties (12, 14).

10. Disposition selon l'une quelconque des revendications 1 à 9, **caractérisée en ce que** les parties (14) sont reliées au moyen d'une charnière à film.

11. Disposition selon l'une quelconque des revendications 1 à 10, **caractérisée en ce que** la sortie (26) est tournée vers la paroi.

12. Disposition selon l'une quelconque des revendications 1 à 11, **caractérisée en ce que** l'espace creux (28) est essentiellement de forme parallélépipédique, l'entrée (24) étant conçue dans la paroi avant (8), alors que la face arrière est libre et qu'elle est constituée de la sortie (26).

13. Disposition selon l'une quelconque des revendications 1 à 12, **caractérisée en ce que** le corps (10) comporte des avancées de centrage orientées vers la paroi.

14. Disposition selon l'une quelconque des revendications 1 à 13, **caractérisée en ce que** les avancées de centrage peuvent être reliées par concordance des formes à des ouvertures de centrage de la paroi ou d'une pièce intermédiaire.

15. Disposition selon l'une quelconque des revendications 1 à 14, **caractérisée en ce que** les parties (12, 14) sont des corps de même forme.
